# EUROPEAN PATENT SPECIFICATION

(11) **EP 2 752 980 B1**
(45) Date of publication and mention of the grant of the patent: **27.06.2018**
(21) Application number: 13150476.3
(22) Date of filing: 08.01.2013
(51) Int. Cl.: H02M 1/36, H02H 3/24, H02M 1/00, H02M 1/32

(54) **Undervoltage cut-off switch for use between load and power supply with output filter capacitor**
Unterspannungstrenner für den Gebrauch zwischen einer Last und einer Versorgung mit Ausgangsfilterkondensator
Interrupteur sous-tension pour l'utilisation entre une charge et un alimentation électrique avec condensateur de filtrage en sortie

(43) Date of publication of application: 09.07.2014
(73) Proprietor: Vestel Elektronik Sanayi ve Ticaret A.S., 45030 Manisa (TR)
(72) Inventor: BAL, Ertug, 45030 Manisa (TR)
(74) Representative: Cayli, Hülya

(56) References cited:
- DE-A1- 2 941 789
- JP-A- 2005 312 218
- US-A- 5 179 337
- US-A1- 2003 099 071
- US-B1- 7 800 869
- CALDWELL S: "CIRCUIT DISCONNECTS LOAD FROM LOW-VOLTAGE SUPPLY", EDN ELECTRICAL DESIGN NEWS.(TEXAS INSTRUMENT), REED BUSINESS INFORMATION, HIGHLANDS RANCH, CO, US, vol. 48, no. 9, 24 April 2003 (2003-04-24) , page 68, XP001159962, ISSN: 0012-7515
- Anonymous: "AND9093/D Using MOSFETs in Load Switch Applications", , 31 August 2012 (2012-08-31), pages 1-7, XP055065714, Retrieved from the Internet: URL:http://www.onsemi.com/pub_link/Collate ral/AND9093-D.PDF [retrieved on 2013-06-06]

## Description

### Technical Field

The present invention is related to power supply systems, wherein voltage supplied to a load is able to be reduced to 0 V.

### Prior Art

Most of the electronic systems (such as set top boxes, televisions, home theatre systems) comprise at least one power supply for converting AC mains voltage to a DC voltage. In the modern electronic systems, switching mode power supplies (SMPS) are commonly used as power supplies. In the switching mode power supplies, generally AC mains voltage is rectified. Then, rectified voltage is filtered to generate a DC (or nearly DC) voltage. By using a transformer, level of said filtered voltage is changed to desired values (according to need of the electronic system). Finally, output voltage of the transformer is filtered again in order to create a DC voltage and said filtered DC voltage is sent to a load in the electronic system.

In the power supplies of the electronic systems (especially in switching mode power supplies), DC filters usually comprises at least one capacitor with relatively high capacitance (more than 1000uF). Because of said capacitor, when the input of the power supply is cut, voltage of the load does not become 0 V. This situation is undesired; because in the electronic systems when input is cut, system should be reset (in other words voltage sent to the load should be 0 V). Otherwise, due to the unwanted current flow through some components of the electronic system, synchronization errors may occur.

In order to reduce the load voltage to 0 V during a power off situation, several systems are used in the known art. Most of these systems comprise a microcontroller for controlling the input voltage and at least a discharge line for discharging or disconnecting the capacitors when input voltage of the power supply is below a threshold voltage. For example in the patent document no. EP1246457A2, a microcontroller controls the input voltage of the power supply and if the input voltage is below a threshold value, filtering capacitor is disconnected from the system. However, these systems are expensive because of the microcontrollers. Furthermore, said microcontrollers cause delays because of their speed limits. US 7,800,869 B1 discloses a simple transistor circuit to disconnect a load from an input voltage.

### Brief Description of the Invention

With the present invention defined by claim 1, a power supply system that converts an AC voltage to at least one DC voltage to feed at least one load is provided. Said power supply system comprises at least one power supply for converting said AC voltage to at least one DC voltage; at least one filtering circuit, which is connected to the output of said power supply; and at least one switching circuit which connects said load to an output of said filtering circuit and which disconnects said load from the output of filtering circuit when voltage level of the output of the filtering circuit is below a predefined level.
In the present invention, switching circuit comprises at least one p-MOS type first transistor, the source terminal of which is connected to the output of the filtering circuit and the drain terminal of which is connected to said load; at least one first resistor which is connected between the gate terminal and the source terminal of the first transistor; and at least one second resistor which is connected between the gate terminal of first transistor and the ground.
According to the present invention, load is disconnected from filtering circuit by the first transistor when the power of the power supply is cut. Since this disconnecting is done by first transistor, voltage of the load set to 0 V rapidly. Furthermore, since switching circuit comprises just transistors and resistors, power supply system requires less space as compared to the known systems.

### Object of the Invention

The main object of the invention is to provide a power supply system, load voltage of which becomes 0 V when input voltage is below a predefined level.

Another object of the present invention is to provide a cheap, fast and reliable power supply system.

### Description of Drawings

Figure 1 shows an example of a power supply system not falling in the scope of the claims.
Figure 2 shows an embodiment of the power supply system of the invention.

The references in the figures may posses following meanings;
- Power supply: (P)
- Filtering circuit: (F)
- Switching circuit: (S)
- Load: (L)
- Capacitor: (C₁)
- Inductor: (L₁)
- First resistor: (R₁)
- Second resistor: (R₂)
- Third resistor: (R₃)
- Forth resistor: (R₄)
- Fifth resistor: (R₅)
- First transistor: (T₁)
- Second transistor: (T₂)

### Detailed Description of the Invention

Electronic systems (such as televisions, set top boxes, home theatres) comprises at least one power supply for converting AC means voltage to a DC voltage. In order to supply an undistorted DC voltage, said power supplies comprises filters, which comprise at least one capacitor. Because of said capacitors, when input of the power supply is cut (for example standby mode of an electronic system), voltage of the load does not become 0 V. When load voltages do not become 0 V, components of the electronic system do not reset and synchronization problems may occur. In order to avoid these problems, present invention provides a power supply system load voltage of which becomes 0 V when input voltage is below a predefined level.

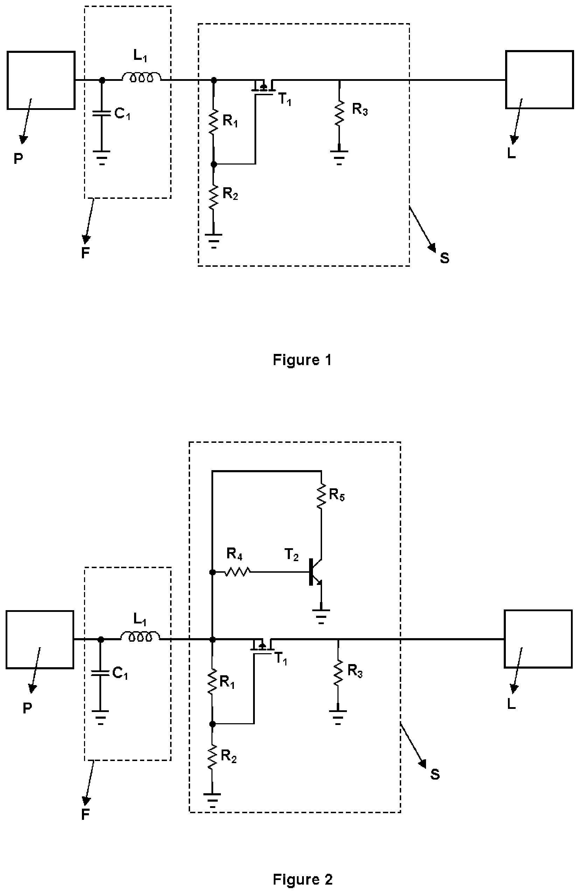

An example of a power supply system not falling into the scope of the claims is given in figure 1, an exemplary embodiment is given in figure 2, see also below. Said system comprises at least one power supply (P) (for example an SMPS) for converting an AC voltage to at least one DC voltage; at least one filtering circuit (F), which is connected to output of said power supply (P) to create undistorted DC voltage; and at least one switching circuit (S) which connects at least one load (L) to an output of said filtering circuit (F) and which disconnects said load (L) from the output of filtering circuit (F) when voltage level of the output of the filtering circuit (F) is below a predefined level. Said filtering circuit (F) preferably comprises at least one capacitor (C₁) and also at least one inductor (L₁). Said switching circuit (S) comprises at least one first transistor (T₁) (p-MOS transistor), the source terminal of which is connected to the output of the filtering circuit (F) and the drain terminal of which is connected to said load (L); at least one first resistor (R₁) which is connected between the gate terminal and the source terminal of the first transistor (T₁); and at least one second resistor (R₂) which is connected between the gate terminal of first transistor (T₁) and the ground. In this embodiment, the first resistor (R₁) and the second resistor (R₂) are used as a voltage divider. By selecting the appropriate resistance values for the first resistor (R₁) and the second resistor (R₂), gate to source voltage of first transistor (T₁) is able to be adjusted. Since both gate voltage and source voltage of the first transistor (T₁) depends on the output voltage of the filtering circuit (F), gate to source voltage of the first transistor (T₁) also depends on the output voltage of the filtering circuit (F). Therefore, operation of the first transistor (T₁) depends on the output voltage of the filtering circuit (F). In other words, if the output voltage of the filtering circuit (F) is below a predefined level, gate to source voltage of the first transistor (T₁) becomes higher than the opening threshold and the first transistor (T₁) does not allow any current to pass from source to drain. Therefore, load is disconnected from the power supply system. According to the present invention, said predefined level is determined by the first resistor (R₁) and the second resistor (R₂). Therefore, sensitivity of the switching circuit (S) is able to be adjusted easily (for example load (L) is able to be disconnected from filtering circuit (F) when input of the power system is interrupted).

In another embodiment of the present invention, the switching circuit (S) comprises at least a third resistor (R₃), which is connected between the drain terminal of the first transistor (T₁) and the ground. In this embodiment, when load (L) is disconnected from power supply system, the third resistor (R₃) discharges any remaining charge on the capacitive components of the load (L). Therefore, load voltage is set to 0 V almost instantly. An exemplary embodiment of the present invention is shown in figure 2. In this embodiment, in addition to the first transistor (T₁), the switching circuit (S) comprises at least one second transistor (T₂). Said second transistor (T₂) is preferably a BJT transistor. Base terminal of the second transistor (T₂) is connected to the source terminal of the first transistor (T₁) through at least one forth resistor (R₄), the collector terminal of the second transistor (T₂) is connected to the source terminal of the first transistor (T₁) through at least one fifth resistor (R₅) and the emitter terminal of the second transistor (T₂) is connected to the ground. Thanks to the second transistor (T₂), when the input of the power supply (P) is cut, said capacitor (C₁) is discharged through said forth resistor (R₄) and fifth resistor (R₅). Therefore, the output voltage of the filtering circuit (F) reduces rapidly below said predefined voltage. In other words, the first transistor (T₁) disconnects load (L) from the filtering circuit (F) rapidly.
According to the present invention, load (L) is disconnected from filtering circuit (F) by the first transistor (T₁) when the power of the power supply is cut. Since this disconnecting is done by first transistor (T₁) (in other words since no microprocessor is needed), voltage of the load (L) set to 0 V rapidly. Furthermore, since switching circuit (S) comprises just transistors and resistors, power supply system requires less space as compared to the known systems.

## Claims

1. A power supply system that converts an AC voltage to at least one DC voltage to feed at least one load (L), said power supply system further comprising at least one power supply (P) for converting said AC voltage to at least one DC voltage; at least one filtering circuit (F), which is connected to the output of said power supply (P) and said system further comprises;
- at least one switching circuit (S) which connects said load (L) to an output of said filtering circuit (F) and which disconnects said load (L) from the output of filtering circuit (F) when voltage level of the output of the filtering circuit (F) is below a predefined level, wherein said switching circuit (S) comprises at least one p-MOS type first transistor (T₁), the source terminal of which is connected to the output of the filtering circuit (F) and the drain terminal of which is connected to said load (L); at least one first resistor (R₁) which is connected between the gate terminal and the source terminal of the first transistor (T₁); at least one second resistor (R₂) which is connected between the gate terminal of first transistor (T₁) and the ground; **characterized in that**
- said at least one filtering circuit (F) comprises one capacitor (C₁),
and
said switching circuit (S) further comprises at least one BJT type second transistor (T₂), wherein the base terminal of the second transistor (T₂) is connected to the source terminal of the first transistor (T₁) through at least one forth resistor (R₄), the collector terminal of the second transistor (T₂) is connected to the source terminal of the first transistor (T₁) through at least one fifth resistor (R₅) and the emitter terminal of the second transistor (T₂) is connected to the ground.

2. A power supply system according to claim 1, **characterized in that**; the switching circuit (S) further comprises at least one third resistor (R₃), which is connected between the drain terminal of the first transistor (T₁) and the ground.

3. A power supply system according to claim 1, **characterized in that**; said filtering circuit (F) comprises at least one inductor (L₁).

4. A power supply system according to claim 1, **characterized in that**; said power supply is a switching type power supply.

## Patentansprüche

1. Spannungsversorgungssystem, das eine Wechselspannung in wenigstens eine Gleichspannung umwandelt, um wenigstens eine Last (L) zu versorgen, wobei das Spannungsversorgungssystem weiter wenigstens eine Spannungsversorgung (P) zum Umwandeln der Wechselspannung in wenigstens eine Gleichspannung und wenigstens eine Filterschaltung (F) aufweist, die mit dem Ausgang der Spannungsversorgung (P) verbunden ist, und wobei das System weiter aufweist:
wenigstens eine Umschaltschaltung (S), die die Last (L) mit einem Ausgang der Filterschaltung (F) verbindet und die die Last (L) von dem Ausgang der Filterschaltung (F) trennt, wenn der Spannungspegel des Ausgangs der Filterschaltung (F) unterhalb eines vordefinierten Pegels ist, wobei die Umschaltschaltung (S) wenigstens einen ersten Transistor (T₁) vom p-MOS-Typ aufweist, dessen Source-Anschluss mit dem Ausgang der Filterschaltung (F) verbunden ist und dessen Drain-Anschluss mit der Last (L) verbunden ist; wenigstens einen ersten Widerstand (R₁), der zwischen dem Gate-Anschluss und dem Source-Anschluss des ersten Transistors (T₁) angeschlossen ist; wenigstens einen zweiten Widerstand (R₂), der zwischen dem Gate-Anschluss des ersten Transistors (T₁) und Masse angeschlossen ist,
**dadurch gekennzeichnet, dass**
die wenigstens eine Filterschaltung (F) einen Kondensator (C₁) aufweist und die Umschaltschaltung (S) wenigstens einen zweiten Transistor (T₂) vom BJT-Typ aufweist, wobei der Basisanschluss des zweiten Transistors (T₂) mit dem Source-Anschluss des ersten Transistors (T₁) über wenigstens einen vierten Widerstand (R₄) verbunden ist, wobei der Kollektoranschluss des zweiten Transistors (T₂) mit dem Source-Anschluss des ersten Transistors (T₁) über wenigstens einen fünften Widerstand (R₅) verbunden ist und der Emitteranschluss des zweiten Transistors (T₂) mit Masse verbunden ist.

2. Spannungsversorgungssystem nach Anspruch 1, **dadurch gekennzeichnet, dass** die Umschaltschaltung (S) weiter wenigstens einen dritten Widerstand (R₃) aufweist, der zwischen dem Drain-Anschluss des ersten Transistors (T₁) und Masse angeschlossen ist.

3. Spannungsversorgungssystem nach Anspruch 1, **dadurch gekennzeichnet, dass** die Filterschaltung (F) wenigstens eine Induktivität (L₁) aufweist.

4. Spannungsversorgungssystem nach Anspruch 1, **dadurch gekennzeichnet, dass** die Spannungsversorgung eine Spannungsversorgung vom Schalttyp ist.

## Revendications

1. Système d'alimentation en énergie qui transforme une tension CA en au moins une tension CC pour alimenter au moins une charge (L), ledit système d'alimentation en énergie comprenant en outre au moins une alimentation en énergie (P) pour transformer ladite tension CA en au moins une tension CC ; au moins un circuit de filtrage (F), qui est relié à la sortie de ladite alimentation en énergie (P) et ledit système comprend en outre ;
- au moins un circuit de commutation (S) qui relie ladite charge (L) à une sortie dudit circuit de filtrage (F) et qui débranche ladite charge (L) de la sortie de circuit de filtrage (F) quand le niveau de tension de la sortie du circuit de filtrage (F) est au-dessous d'un niveau prédéterminé, dans lequel ledit circuit de commutation (S) comprend au moins un premier transistor (T₁) de type p-MOS, dont la borne de source est reliée à la sortie du circuit de filtrage (F) et dont la borne de drain est reliée à ladite charge (L) ; au moins une première résistance (R₁) qui est reliée entre la borne de grille et la borne de source du premier transistor (T₁) ; au moins une deuxième résistance (R₂) qui est reliée entre la borne de grille de premier transistor (T₁) et la masse ; **caractérisé en ce que**
- ledit au moins un circuit de filtrage (F) comprend un condensateur (C₁),
et
ledit circuit de commutation (S) comprend en outre
au moins un second transistor (T₂) de type BJT, dans lequel la borne de base du second transistor (T₂) est reliée à la borne de source du premier transistor (T₁) par l'intermédiaire d'au moins une quatrième résistance (R₄), la borne de collecteur du second transistor (T₂) est reliée à la borne de source du premier transistor (T₁) par l'intermédiaire d'au moins une cinquième résistance (R₅) et la borne d'émetteur du second transistor (T₂) est reliée à la masse.

2. Système d'alimentation en énergie selon la revendication 1, **caractérisé en ce que**; le circuit de commutation (S) comprend en outre au moins une troisième résistance (R₃), qui est reliée entre la borne de drain du premier transistor (T₁) et la masse.

3. Système d'alimentation en énergie selon la revendication 1, **caractérisé en ce que** ; ledit circuit de filtrage (F) comprend au moins une bobine d'inductance (L₁).

4. Système d'alimentation en énergie selon la revendication 1, **caractérisé en ce que** ; ladite alimentation en énergie est une alimentation en énergie de type à commutation.
